Europäisches Patentamt

European Patent Office

Office européen des brevets

(19)

(11) Publication number: **0 193 141**
**A2**

# EUROPEAN PATENT APPLICATION

(12)

(21) Application number: **86102323.2**

(22) Date of filing: **22.02.86**

(51) Int. Cl.⁴: **H 04 L 5/16**

(30) Priority: **25.02.85 US 705459**

(43) Date of publication of application:
**03.09.86 Bulletin 86/36**

(84) Designated Contracting States:
**CH DE FR GB IT LI NL**

(71) Applicant: **International Standard Electric Corporation
320 Park Avenue
New York New York 10022(US)**

(72) Inventor: **Gerety, Eugene Peter
18 Longmeadow Drive
Wolcott, CT 06716(US)**

(72) Inventor: **Vij, Jitender Kumar
353 Putting Green Road
Trumbull, CT 06611(US)**

(74) Representative: **Villinger, Bernhard, Dipl.-Ing. et al,
Standard Elektrik Lorenz AG Patent- und Lizenzwesen
Postfach 300 929 Kurze Strasse 8
D-7000 Stuttgart 30(DE)**

(54) Method of and apparatus for use in synchronizing devices.

(57) An apparatus (10) for use in synchronizing the line adaptation between devices includes a quad flip-flop (34) a state machine (39), and a delay generator (40) having selectable delays which delays are preferably sequentially decreasing as the apparatus (10) moves from state to state.

./...

Croydon Printing Company Ltd.

FIG. 2

# METHOD OF AND APPARATUS FOR USE IN SYNCHRONIZING

## DEVICES

The present invention relates to a method of synchronizing a peripheral interface device and a peripheral data communication device and to an apparatus for carrying out such a method.

In order to establish electronic communication between any two data transceivers across a single medium it is necessary to ensure that simultaneous transmissions thereof do not interfere with each other. The most obvious solution is to establish a communication link that allows only one party to transmit at any given time. This is generally known as the "ping-pong" technique. That is, a single wire, or communication link, is time shared. In a ping-pong communication system, one party is generally designated the master, and the other the slave. The master transmits periodic bursts of data, after which it leaves a non-transmitting gap long enough for the slave to respond. The slave is constrained to transmit only after the master has completed a transmission.

Since neither party has full-time access to the communication medium, data rates are necessarily lower than the full data capacity of the medium. If both parties are transmitting the same amount of information to each other at the same speed then each party has access to the medium for less than one-half of the total time, since some time is lost when the medium is turned over from master to slave, and vice versa. As a result, each party must transmit at a rate greater than twice that which would otherwise be necessary. The conventional resolution to the difficulties of the "ping-pong" technique is to provide each party with equipment enabling it to remove the results of its own transmission from the signals it receives over the medium. Thus, both parties can transmit simultaneously, since the signal remaining after removing the results of their own transmission is the signal transmitted by the other party. In practice, this is most frequently implemented in a telephone subset by a circuit known as a "hybrid", where the medium used is a twisted pair of wires. Although the telephonic hybrid is primarily for voice communications, the same and similar techniques have been used for digital communications. This solution, however, is not without problems. When the frequencies transmitted and received rise above the low audio range and as distances increase especially for transmission across a twisted pair of wires, it becomes increasingly difficult to design a circuit that will remove enough of ones own transmitted signal to leave an intelligible received signal. This is due to several factors, for example: echos due to reflections on the line, echos are more significant at higher frequencies where the nominal wavelength of the signals is less than one-fourth of the length of the transmission line; impedance mismatch due to secondary effects are more prevalent at higher frequencies and long line lengths; and time-variation of both of the aforementioned factors. For these reasons, it becomes necessary to provide some form of line adaptation mechanism. However, current line adaption mechanisms require that the data transmitted by both parties be statistically uncorrelated. It is not presently possible to guarantee statistically uncorrelated data between parties which transmit similarly formatted data at identical signalling rates.

It is an object of the present invention to provide a method and an apparatus adapted to synchronize the line adaptation of devices to ensure the accurate exchange of digitally encoded information.

According to the invention, this object is attained by the method claimed in claim 1 and by the apparatus claimed in claim 7.

Developments of the invention are characterized in the subclaims.

An embodiment of the invention will now be explained in detail with reference to the accompanying drawings, in which:

Figure 1 is a block diagram of an apparatus embodying the principles of the present invention in one intended functional environment;.

Figure 2 is a block diagram of the apparatus shown in Figure 1;

Figure 3 is a state transition table for the state machine shown in Figure 2;

Figure 4 is a block diagram of a latch useful as shown in Figure 2;

Figure 5 is a block diagram of a delay generator useful as shown in Figure 2; and

Figures 6A and 6B are state diagrams of the method of adapatation between two data devices.

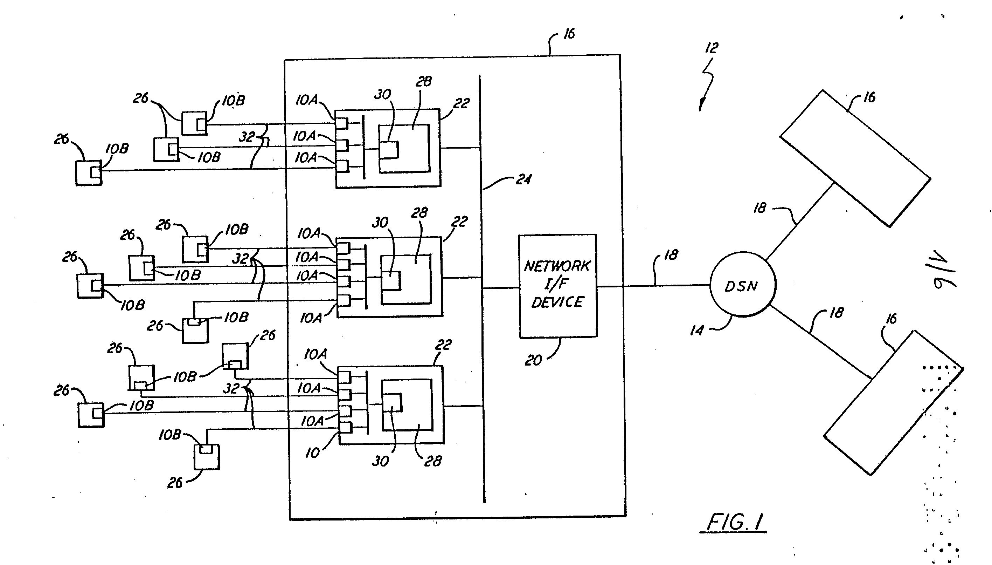

An apparatus, generally indicated at 10 in Figure 1 and embodying the principles of the present invention, is shown, in an exemplary operating environment therefor. As shown, the exemplary environment is a data communication system 12, only a portion of which is acutally depicted in detail. The system 12 includes a digital switching network 14 having a plurality of subsystems 16 interconnected thereto via a plurality of communication links 18. Thus, the subsystems 16 are fully intercommunicative between and among each other.

The plurality of subsystems 16 are, preferably, substantially identical and each is adapted to interface with a plurality of peripherals. The exchange of data with each one of those peripherals being subject to the synchronization of that peripheral and the subsystem 16.

As shown in Figure 1, each subsystem 16 includes at least one network interface device 20 and at least one peripheral interface device 22. The peripheral interface devices 22 and the network interface device 20 are interconnected via an intrasubsystem bus 24.

Each peripheral interface device 22 is capable of servicing a plurality of peripherals 26. In one preferred arrangement, each peripheral interface devices 22 of each subsystem 16 is provided with a data transport controller 28 including therein a device interface controller 30 capable of supporting a plurality of peripherals 26, for example, each peripheral interface device 22 can be adapted to service eight twisted pairs of wires.

As shown in Figure 1, each peripheral interface device 22 has one apparatus 10 associated therewith for each peripheral 26 interconnected thereto. In addition, each peripheral 26 has a substantially identical apparatus 10 associated therewith. Each apparatus 1J associated with the peripheral interface device 22 is, in the preferred embodiment, preferably, interconnected to the corresponding apparatus 10 of the peripheral 26 by mean: of a twisted pair of wires 32.

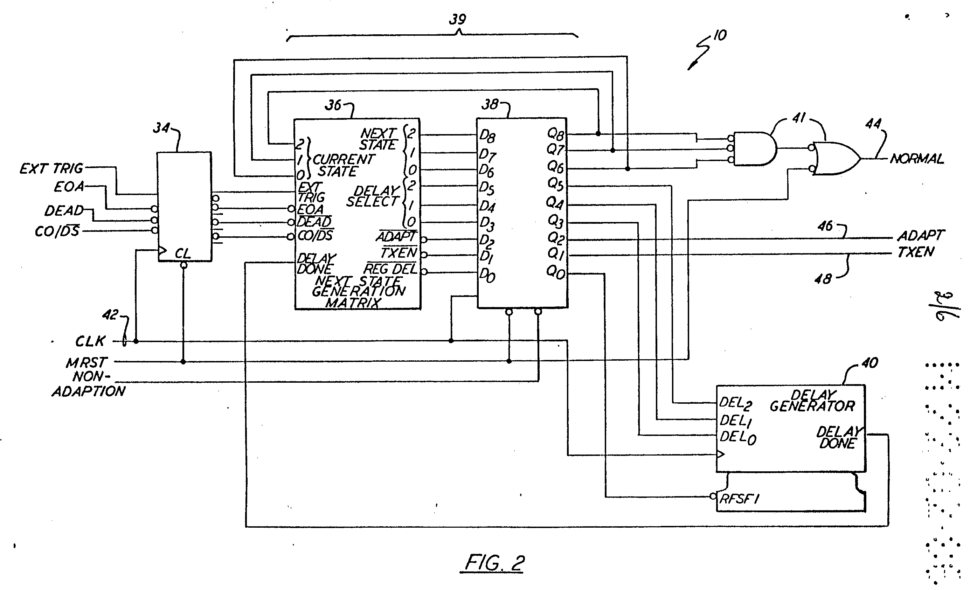

In the preferred embodiment, the apparatus 10 includes, as shown in the block diagram of Figure 2, a quad flip-flop 34, a logic matrix 36, a latch 38 and a delay generator 40. The logic matrix 36 and the latch 38 effectively form a state machine 39. In addition, logic gates 41 are provided to implement the desired communication line conditions. In this embodiment, the quad flip-flop 34 synchronizes the current inputs to the clock of the state machine 39. As known in the art, the phrase "state machine" is generally taken to mean any device having the output thereof dependent only upon the current state thereof and the current inputs thereto. In general, the latch 38, in this embodiment, is a nine-bit latch and receives inputs from the logic matrix 36 and, on a clock pulse, transfers those inputs to the output thereof and retains that output state until the following clock pulse. The delay generator 40, as more fully discussed below, introduces prespecified delays between the various states of the state machine 39 during the synchronization, or handshake, procedure.

As shown, a clock signal (CLK) is provided by an external system clock, not shown in the drawings, to the quad flip-flop

34, the latch 38 and the delay generator 40 via a clock line 42. This common clocking signal ensures the synchronization of the elements of the apparatus 10. In addition, a master reset signal (MRST) is provided by an external controller, not shown in the drawings, to allow the apparatus 10 to be initialized to a predetermined state. A non-adaption signal is provided to the latch 38 from an external controller, not shown in the drawings, to force a preselected output therefrom. The non-adaption signal is used, for example, when the communication line is, for example, sufficiently short that adaptation is unnecessary.

The apparatus 10 has, inter alia, three output status lines, 44, 46, and 48 designated as NORMAL, ADAPT, and (TXEN) i.e. transmit enable, respectively. Functionally, so long as the line 44 i.e. the normal status line, has a preselected binary value, normal data exchange can be attempted subject to prevailing system conditions. When the ADAPT line 46 changes state the circuitry associated with normal operation is shut down, or disabled to allow the line adaptation mechanism to operate. The state of the TXEN line 48 determines whether or not data can be transmitted over the twisted pair 32. This control of the transmission path is necessary since, during the line adaptation procedure, the normal data path is used for exchanging reference messages. Hence, normal data exchange cannot be permitted during the synchronization procedure.

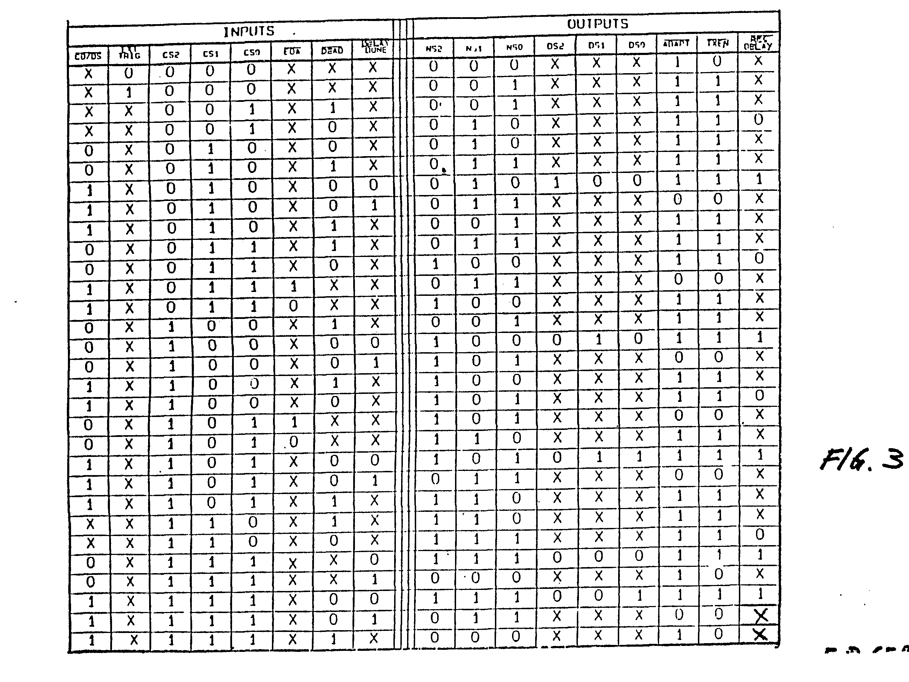

Preferably, the state machine 39 operates according to the state transition matrix shown in Figure 3. The 0's and 1's represent binary states whereas the X's indicate that the

E. P. GERETY, ET AL 6-6
0193141

binary state at that particular port, under the prevailing condition, is irrelevant to the operation of the apparatus 10. As known, a binary 1, or high, state and a binary 0, or low, state represent relative voltages and not any particular voltage level. In fact, the designation of a high or low state is immaterial so long as it is consistent since all functional results depend only upon a change of binary value and not the actual voltage levels associated therewith. As well known in the art, a state machine 39 can be fabricated from the matrix shown in Figure 3 using presently available devices, such as, programmable array logic (PAL) devices or programmable read-only-memory (PROM) devices.

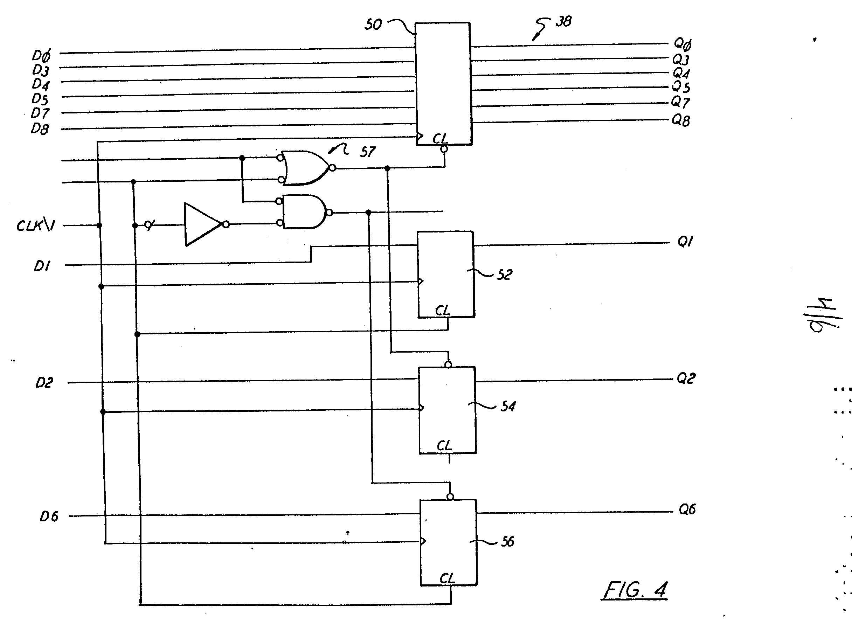

In the preferred embodiment, with reference to Figure 4, the latch 38 includes a six bit latch 50 and first, second and third single bit latches, 52, 54, and 56, respectively. In addition, logic gates 57 are provided to control the inputs to the single bit latches, 52, 54 and 56. The first, second and third single bit latches, 52, 54 and 56 are arranged to control access to the transmission path when synchronization is implemented.

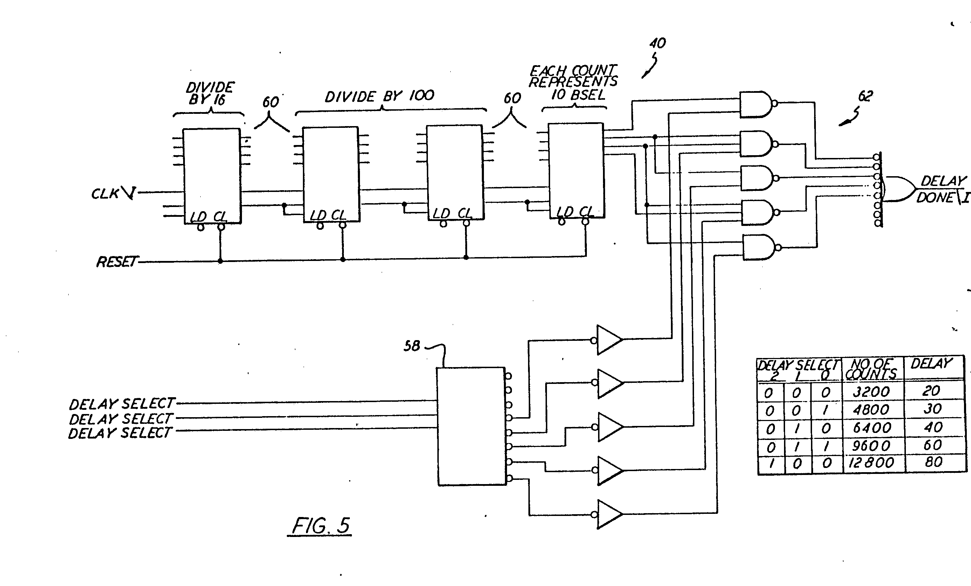

The block diagram of Figure 5 depicts one implementation of the delay generator 40 including therein a demultiplexer 58, a plurality of counters 60 and means 62 for providing a binary signal change to one input part of the state machine 39 after a preselected delay. Preferably, the demultiplexer 58 is a three-line to eight-line demultiplexer,

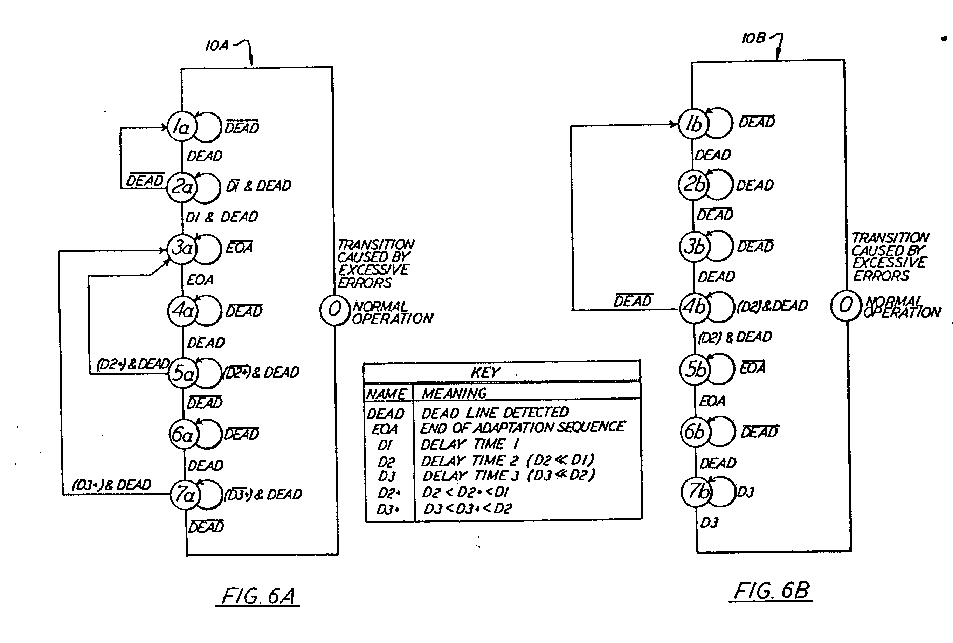

The counters 60 and logic gates 62 are arranged to provide preselected time delays such as shown in the table accompanying Figure 5. The demultiplexer 58 is, effectively, a delay selection means whereby, as shown according to the table in Figure 5, the state machine 39, depending upon the states thereof introduces certain time delays between specific states. The use of the time delays to ensure synchronization is more fully discussed hereafter with respect to Figures 6A and B.

The preferred method of operation is discussed hereinafter with reference to Figures 6A and 6B. This method is implemented in conjunction with the above-mentioned state transition table set forth in the matrix shown in Figure 3 with the appropriate delays according to the table in Figure 5. For the following discussions the initial operating conditions assumed are: the sequence shown in Figure 6A is for an apparatus 10A associated with the peripheral interface device 22 and is initially in State 0 i.e. a normal operating condition; the sequence shown in Figure 6B is for an apparatus 10B associated with a peripheral 26 interfacing with the peripheral interface device 22 and is also initially in State 0. In addition, it will be understood that each apparatus, 10A and 10B, has a conventional line adaptation circuitry associated therewith. As more fully discussed below this circuitry is arranged to generate a reference message upon receipt of an enabling signal from the associated apparatus, 10A or 10B. Further, such devices or circuitry is well known in the art and, after performing its adaptation procedure, provides an "End of Adaptation" signal to the respective apparatus, 10A or 10B. Such mechanisms are, in fact, well known in the art.

When either apparatus, 10A or 10B, detects errors it shifts, due to a change in the binary value at, for example the EXT TRIG port of the state machine 39, from state 0 to state 1. As indicated by the closed loop adjacent State 1, the apparatus, 10A or 10B, remains in State 1 so long as the line is not dead i.e. $\overline{DEAD}$ indicating that the line is still being transmitted on by the other party. The first apparatus, 10A or 10B, detecting the need to adapt and moving to State 1, for example State 1A causes the transmitter associated with the apparatus, 10A or 10B, to be shut off via the control lines 44, 46, and 48. The fact that one of the transmitters is shut off causes errors to be received by the other party whereupon it too recognizes the need to adapt. When both apparatus, 10A and 10B, have made the transition to States 1A and 1B respectively, i.e. the twisted pair or line is dead, both then shift into State 2. To prevent both apparatus 10A and 10B from entering the synchronization procedure at the identical step the input CO/DS to the state machine 39 is preset, although it can be dynamically changed to indicate which apparatus, 10A or 10B, will transmit the first reference message as discussed below.

The peripheral apparatus 10B associated with the peripheral 26, shown in Figure 6B, remains in State 2A so long as the line is dead i.e. the transition from State 2B to 3B can occur only if the line condition is active, or $\overline{\text{DEAD}}$. The apparatus 10A preselected to transmit the reference message first, remains, however, in State 2A for a fixed delay D1. At the end of that delay and if the line is dead, i.e. under the condition (D1+), and DEAD, the apparatus 10A, as shown in Figure 6A, shifts to State 3A. However, if, while in State 2A, the line remains active, i.e. $\overline{\text{DEAD}}$ after D1 the apparatus 10A preceives this as apparatus 10B not being disabled, a transition back to State 1A occurs and is maintained until the line becomes dead. In this fashion, the absence of a signal, i.e. a dead line, is effectively utilized to signal the need to synchronize operation between two data transceiver devices.

In State 3A the apparatus 10A enables the transmission of reference message, i.e. a predetermined data pattern and signals to the external adaptation circuitry that adaptation can be initiated. As aforementioned, upon completion of the adaptation procedure an End of Adaptation (EOA) message is indicated and transition from State 3A to State 4A occurs. During the same period of time the apparatus 10B remains in State 3B so long as the line is active i.e. $\overline{\text{DEAD}}$, specifically when it is being used for synchronization purposes by the other party, i.e. 10A. During this time period the reference message enabled by 10A is received by 10B and, since the reference message is known, the reception at 10B is checked. When the line goes dead the apparatus 10B moves from State 3B to State 4B.

In State 4B a second time period (D2) is allowed to elapse and, simultaneously, if the line is dead (D2+DEAD) thereafter the apparatus 10B moves to State 5B. The apparatus 10A, after the End of Adaptation is indicated at State 4A, remains in state 4 so long as the line is not dead, i.e. $\overline{DEAD}$ when apparatus 10B is transmitting its reference message. After completing the reference message the apparatus 10B shifts from State 5B to State 6B where it remains until the line is dead. When the line is dead the apparatus 10B shifts to State 7B and remains there for a third delay time (D3) after which apparatus 10B enables the associated NORMAL line 44 and normal operations are resumed.

The apparatus 10A, remains in State 5A for a time period slightly greater than D2, i.e. (D2+), and a transition to state 6A and is conditional upon the line being dead. If, however, after that time period the line remains dead, i.e. the condition (D2+) + DEAD, the apparatus 10A, expecting to see the adaptation message from the apparatus 10B, shifts to State 3A where upon it begins its own synchronization sequence again. That is, if, for any reason, the apparatus 10B does not begin the reference message, apparatus 10A recognizes this as a mode to restart the synchronization procedure. Such a time delay method eliminates the possibility of the two apparatus, 10A and 10B, being out of synchronization while nevertheless appearing to be synchronized. However, upon detecting line activity, i.e. $\overline{DEAD}$ the apparatus 10A shifts to State 6A and remains thereat until a dead line is detected again. Thereafter, the apparatus 10A shifts to State 7A remaining thereat for a short time period (D3) and shifts to either State 3 or State 0, depending upon whether or not a dead or active, line, is detected. If an active line is detected, i.e. $\overline{\text{DEAD}}$, indicative that apparatus 10B is in, State 0, i.e. normal operation, the apparatus 10A also shifts to State 0 and resumes normal bidirectional operation. Alternatively, if no line activity is detected, i.e. DEAD, then the apparatus 10A returns to State 3A whereupon the adaptation, or synchronization, sequence begins again.

As indicated in the key, shown in Figures 6A and 6B, the delay times are sequentially decreasing, i.e. delay time (D1) is very much greater than delay time (D2) which is very much greater than delay time (D3). These sequentially decreasing time delays avoid the possibility of a continuous misinterpretation of the state of the other party during the synchronization sequence. The transition delays at States 4A and 6B, are provided to allow the respective apparatus, 10A or 10B, to fully shut off, i.e. to allow a settling time for the detecting or receiving, devices associated therewith.

As fully discussed above, the present apparatus 10 and the associated method are advantageous because the synchronization of the line adaptation between any two devices exchanging data is performed by out-of-band signalling, thereby making any external synchronization line unnecessary. In addition, the synchronization occurs by the positive use of, and significance given to, a dead line in conjunction with a sequentially decreasing set of time delays transition states of the state machine 39.

Although the present invention has been described herein with respect to an exemplary embodiment it will be understood that other arrangements may also be developed which are within the scope of the present invention. Consequently, the present invention is considered limited only by the attached claims and the reasonable interpretation thereof.

Claims

1. Method of synchronizing a peripheral interface device (22) and a peripheral data communication device (26) characterized in that it comprises the steps of:

- indicating a change of activity on a communication line (32) connecting said peripheral interface device (22) and said peripheral data communication device (26);

- acquiring control over said peripheral interface device (22);

- disabling said peripheral interface device (22) whereby said peripheral data communication device (26) receives error messages caused by said disabling of said peripheral interface device (22);

- disabling said peripheral data communication device (26) in response to said error messages; and

- executing a synchronization process.

2. Method according to claim 1, characterized in that said synchronization process comprising the steps of:

- introducing a first time delay when said peripheral interface device (22) is disabled;

- monitoring said line subsequent to said first time delay to detect activity thereon;

- either reintroducing, after said monitoring steps, said first time delay if said monitoring step detects acitivity on said line or enabling a line adaptation procedure, via said peripheral interface device (22), if said monitoring step detects a dead line.

3. Method according to claim 2, characterized in that said synchronization process further comprising the step of:
- enabling, after a second time delay, a line adaptation procedure via said peripheral data communication device (26), said second time delay being less than said first time delay.

4. Method according to claim 3, characterized in that said synchronization process further comprises the step of: reenabling said line adaptation procedure via said peripheral interface device (22) if said line activity from said line adaptation procedure via said peripheral data communication device (26) is undetected after a time greater than said second time delay but less than said first time delay.

5. Method according to claim 4, characterized in that said synchronization process further comrpises the steps of:
- introducing a third time delay, said time delay being less than said second time delay;
- reenabling, after said third time delay, said peripheral data communication device (26);
- reenabling, in response to said reenabling of said peripheral data communication device (26), said peripheral interface device (22) after completion of said line adaptation procedure from said peripheral data communication device (26) and expiration of said third time delay.

6. Method according to claim 5, characterized in that said synchronization process further comprises the step of: reenabling said line adaptation procedure via said peripheral interface device (22) if enabling said peripheral data communication device (26) is undetected after a time greater than said third time delay but less than said second time delay.

7. Apparatus for use in synchronizing line adaptation between a peripheral interface device (22) and a peripheral data communication device (26) which are interconnected via a communication line (32), characterized in that it comprises a first apparatus (10A) associated with said peripheral interface device (22), said first apparatus (10A) having means for indicating a change of activity on said communication line (32), means, responsive to said change of acitivity indication, for acquiring control of said first apparatus (10A) and a state machine (39) for executing a synchronization process having a plurality of steps, said synchronization process including transition states dependent upon different time delays; a second apparatus (10B) associated with said peripheral data communication device (26), said second apparatus (10B) being substantially identical with said first apparatus (10A); and a different binary input to each said state machine (39) for coordinating said synchronization process of said first apparatus (10A) with that of said second apparatus (10B) whereby said device initiating a reference message first is selected.

0193141

8. Apparatus according to claim 7, characterized in that each said state machine (39) having a quad flip-flop (34) for receiving an input (EOA) indicative of the completion of a line adaptation procedure whereby one state transition of each said state machine (39) dependents upon the reception of said input.

9. Apparatus according to claim 8, characterized in that it comprises means, associated with each said apparatus (10A, 10B), for disabling said device (22, 26) associated therewith thereby causing a change in acitivty on said communication line (32).

10. Apparatus according to claim 7, characterized in that it comprises a delay generator (40) being adapted to generate a signal indicative of the end of each said time delay.

11. Apparatus according to claim 10, characterized in that each delay generator (40) includes a plurality of serially connected counters (60); and a demultiplexer (58), the ouptut from said demultiplexer (58) and said counters (60) being adapted to provide a delay completion signal to said state machine (39).

- 5 -

0193141

12. Apparatus according to claim 11, characterized in that said delay generator (40) includes means (62) for providing a selected one of a plurality of time delays.

13. Apparatus according to claim 12, characterized in that said time delay provided is selected by the state of said state machine (39).

14. Apparatus according to claim 12, characterized in that said state machine (39) selects progressively decreasing time delays.

FIG.I

FIG. 2

E.P. GERETY 6-6

| INPUTS | | | | | | | | OUTPUTS | | | | | | | | |
|---|---|---|---|---|---|---|---|---|---|---|---|---|---|---|---|---|
| COTOS | TRIG | CS2 | CS1 | CS0 | EOA | DEAD | DELAY DONE | NS2 | NS1 | NS0 | DS2 | DS1 | DS0 | ADAPT | TREN | RES DELAY |
| X | 0 | 0 | 0 | 0 | X | X | X | 0 | 0 | 0 | X | X | X | 1 | 0 | X |
| X | 1 | 0 | 0 | 0 | X | X | X | 0 | 0 | 1 | X | X | X | 1 | 1 | X |
| X | X | 0 | 0 | 1 | X | 1 | X | 0 | 0 | 1 | X | X | X | 1 | 1 | X |
| X | X | 0 | 0 | 1 | X | 0 | X | 0 | 1 | 0 | X | X | X | 1 | 1 | 0 |
| 0 | X | 0 | 1 | 0 | X | 0 | X | 0 | 1 | 0 | X | X | X | 1 | 1 | X |
| 0 | X | 0 | 1 | 0 | X | 1 | X | 0 | 1 | 1 | X | X | X | 1 | 1 | X |
| 1 | X | 0 | 1 | 0 | X | 0 | 0 | 0 | 1 | 0 | 1 | 0 | 0 | 1 | 1 | 1 |
| 1 | X | 0 | 1 | 0 | X | 0 | 1 | 0 | 1 | 1 | X | X | X | 0 | 0 | X |
| 1 | X | 0 | 1 | 0 | X | 1 | X | 0 | 0 | 1 | X | X | X | 1 | 1 | X |
| 0 | X | 0 | 1 | 1 | X | 1 | X | 0 | 1 | 1 | X | X | X | 1 | 1 | X |
| 0 | X | 0 | 1 | 1 | X | 0 | X | 1 | 0 | 0 | X | X | X | 1 | 1 | 0 |
| 1 | X | 0 | 1 | 1 | 1 | X | X | 0 | 1 | 1 | X | X | X | 0 | 0 | X |
| 1 | X | 0 | 1 | 1 | 0 | X | X | 1 | 0 | 0 | X | X | X | 1 | 1 | X |
| 0 | X | 1 | 0 | 0 | X | 1 | X | 0 | 0 | 1 | X | X | X | 1 | 1 | X |
| 0 | X | 1 | 0 | 0 | X | 0 | 0 | 1 | 0 | 0 | 0 | 1 | 0 | 1 | 1 | 1 |
| 0 | X | 1 | 0 | 0 | X | 0 | 1 | 1 | 0 | 1 | X | X | X | 0 | 0 | X |
| 1 | X | 1 | 0 | 0 | X | 1 | X | 1 | 0 | 0 | X | X | X | 1 | 1 | X |
| 1 | X | 1 | 0 | 0 | X | 0 | X | 1 | 0 | 1 | X | X | X | 1 | 1 | 0 |
| 0 | X | 1 | 0 | 1 | 1 | X | X | 1 | 0 | 1 | X | X | X | 0 | 0 | X |
| 0 | X | 1 | 0 | 1 | 0 | X | X | 1 | 1 | 0 | X | X | X | 1 | 1 | X |
| 1 | X | 1 | 0 | 1 | X | 0 | 0 | 1 | 0 | 1 | 0 | 1 | 1 | 1 | 1 | 1 |
| 1 | X | 1 | 0 | 1 | X | 0 | 1 | 0 | 1 | 1 | X | X | X | 0 | 0 | X |
| 1 | X | 1 | 0 | 1 | X | 1 | X | 1 | 1 | 0 | X | X | X | 1 | 1 | X |
| X | X | 1 | 1 | 0 | X | 1 | X | 1 | 1 | 0 | X | X | X | 1 | 1 | X |
| X | X | 1 | 1 | 0 | X | 0 | X | 1 | 1 | 1 | X | X | X | 1 | 1 | 0 |
| 0 | X | 1 | 1 | 1 | X | X | 0 | 1 | 1 | 1 | 0 | 0 | 0 | 1 | 1 | 1 |
| 0 | X | 1 | 1 | 1 | X | X | 1 | 0 | 0 | 0 | X | X | X | 1 | 0 | X |
| 1 | X | 1 | 1 | 1 | X | 0 | 0 | 1 | 1 | 1 | 0 | 0 | 1 | 1 | 1 | 1 |
| 1 | X | 1 | 1 | 1 | X | 0 | 1 | 0 | 1 | 1 | X | X | X | 0 | 0 | X |
| 1 | X | 1 | 1 | 1 | X | 1 | X | 0 | 0 | 0 | X | X | X | 1 | 0 | X |

FIG. 3

*FIG. 4*

0193141

E.P. GERETY 6-6

FIG. 5

| DELAY SELECT | | | NO. OF COUNTS | DELAY |
|---|---|---|---|---|
| 2 | 1 | 0 | | |
| 0 | 0 | 0 | 3200 | 20 |
| 0 | 0 | 1 | 4800 | 30 |
| 0 | 1 | 0 | 6400 | 40 |
| 0 | 1 | 1 | 9600 | 60 |
| 1 | 0 | 0 | 12800 | 80 |

E. P. GERETY 6-6

0193141

FIG. 6A

FIG. 6B

| KEY | |
|---|---|
| NAME | MEANING |
| DEAD | DEAD LINE DETECTED |
| EOA | END OF ADAPTATION SEQUENCE |
| DI | DELAY TIME 1 |
| D2 | DELAY TIME 2 (D2 ≪ DI) |
| D3 | DELAY TIME 3 (D3 ≪ D2) |
| D2+ | D2 < D2+ < DI |
| D3+ | D3 < D3+ < D2 |

TRANSITION CAUSED BY EXCESSIVE ERRORS

NORMAL OPERATION

0193141

E.P. GERETY 6-6

9/9